Europäisches Patentamt

European Patent Office

Office européen des brevets

(19)

(11) Numéro de publication: **0 269 480 B1**

(12) **FASCICULE DE BREVET EUROPEEN**

(45) Date de publication de fascicule du brevet:
26.06.91

(51) Int. Cl.⁵: **C23C 4/02**, C23C 28/00,
C04B 41/52

(21) Numéro de dépôt: 87402364.1

(22) Date de dépôt: 21.10.87

(54) Revêtement métallique réalisé sur un substrat minéral.

(30) Priorité: 04.11.86 FR 8615319

(43) Date de publication de la demande:
01.06.88 Bulletin 88/22

(45) Mention de la délivrance du brevet:
26.06.91 Bulletin 91/26

(84) Etats contractants désignés:
DE ES IT SE

(56) Documents cités:
DE-A- 2 545 242    FR-A- 1 090 257
FR-A- 1 434 158    FR-A- 1 505 106
FR-A- 2 037 986    GB-A- 1 133 403
GB-A- 1 162 390    US-A- 3 010 480

PATENT ABSTRACTS OF JAPAN, vol. 6, no.
174 (C-123)[1052], 8 septembre 1982; & JP-
A-57 89 470

PATENT ABSTRACTS OF JAPAN, vol. 6, no.
239 (C-137)[1117], 26 novembre 1982; & JP-
A-57 140 876

PATENT ABSTRACTS OF JAPAN, vol. 8, no.
56 (C-214)[1493], 14 mars 1984; & JP-A-58 213

864

(73) Titulaire: **TOTAL Compagnie Française des
Pétroles**
**5 rue Michel-Ange**
**F-75016 Paris(FR)**

(72) Inventeur: **Ducos, Maurice**
**Route d'Uchaux**
**F-84550 Mornas(FR)**
Inventeur: **Serio, André**
**12, rue des Laris**
**F-92190 Meudon(FR)**

(74) Mandataire: **Ohayon, Joseph et al**
**Cabinet Jolly 54, rue de Clichy**
**F-75009 Paris(FR)**

## Description

L'invention concerne un procédé de fabrication d'un revêtement métallique adhérent réalisé sur un substrat minéral du type roche, tel que des grès ou des roches quelconques.

On sait que l'on peut effectuer des revêtements métalliques sur divers substrats par les techniques de projection à chaud d'un matériau d'apport constitué par un alliage métallique dit "autofusible" sous forme de particules fondues ou à l'état pâteux qui, par l'effet de la vitesse à laquelle elles sont soumises, viennent s'écraser sur le substrat en formant une couche plus ou moins poreuse et plus ou moins adhérente. Le matériau d'apport peut se présenter sous forme de fils pleins, de fils fourrés, de baguettes, de cordons souples, de poudres. La température à laquelle sont portées les particules peut être obtenue par des combustions de gaz ou des arcs électriques. La vitesse des particules, provoquée par l'action de gaz comprimés, de flammes de combustion ou de colonnes de plasmas, peut varier de quelques mètres par seconde à plusieurs fois la vitesse du son. On utilise pour cette projection à chaud des pistolets à flamme y compris des canons à détonation et des pistolets à arc électrique y compris des générateurs de plasmas.

On sait que l'on peut densifier la couche déposée afin d'éliminer toutes les porosités et d'obtenir un dépôt métallique étanche en effectuant une fusion de cette couche, par chauffage, par exemple, à induction, à gaz, à laser et à faisceau d'électrons, d'un métal ou d'un alliage métallique.

Mais avec un substrat minéral du type roche, on se heurte à des difficultés d'adhérence du revêtement métallique telles que la réalisation d'un revêtement métallique étanche sur un tel substrat paraissait jusqu'ici impossible.

La présente invention a pour objectif de rendre cette réalisation possible et elle prévoit à cette effet une couche intermédiaire qui permet, en outre, d'encaisser les contraintes dues à la fusion et au retrait de l'alliage métallique constituant le revêtement métallique et qui peut, si le substrat minéral du type roche est formé de plusieurs pièces, maintenir temporairement celles-ci en position pendant la projection et la refusion de cet alliage métallique et contribuer ensuite à leur maintien définitif.

Un premier objet de l'invention est un procédé de fabrication d'un revêtement métallique sur un substrat minéral du type roche selon la revendication 1.

Cette couche intermédiaire peut être elle-même déposée sur une sous-couche en une céramique prise dans la liste des oxydes d'aluminium et de zirconium et des hydrures de titane, formée par projection à chaud sur le substrat minéral.

Cette sous-couche améliore encore l'adhérence de la couche intermédiaire sur certains substrats et elle contribue éventuellement au maintien des pièces formant le substrat.

Par les brevets FR-A-1 505 106 et GB-A-1 162 390, on connaît un procédé de fabrication d'un composant électrique à corps céramique, qui consiste à déposer sur ledit corps une couche de chrome-nickel par vaporisation sous vide puis une couche de métal soudable sur la couche précédente également par vaporisation sous vide. Toutefois, la technique de la vaporisation sous vide est totalement différente de celle de la projection à chaud, et, de plus, par ce procédé, on n'arrivera pas à déposer un revêtement métallique sur une roche, telle que du grès.

Le brevet GB-A-1 133 403 concerne également un procédé de dépôt de couches métalliques sur un substrat en silice pure, à partir d'une source d'alumine chauffée par bombardement électronique sous une très faible pression. Il s'agit donc ici également d'une vaporisation sous vide. Par ce procédé, on ne pourra donc pas réaliser un dépôt métallique sur une roche.

On connaît également par JP-A-58 213 864 un procédé de revêtement par projection à chaud sur une paroi métallique, ce qui n'a donc rien à voir avec le revêtement d'une roche. De plus, les couches déposées ne sont pas refondues pour les rendre étanches. Enfin, la couche intermédiaire contient seulement du nickel-chrome mais pas d'aluminures de nickel et de titane.

Les mêmes objections peuvent être formulées à l'encontre des brevets JP-A-57 89 470, 57 140 876 et DE-A-2 545 242 dans lesquels le substrat est métallique.

Selon l'invention, des sondes de mesure sont montées sur le substrat minéral et recouvertes par ladite couche intermédiaire qui les maintient en place. Ces sondes se trouvent noyées soit dans une portion de l'épaisseur de la couche intermédiaire soit dans ladite sous-couche si celle-ci existe.

L'épaisseur de la sous-couche sera généralement inférieure à 0,5 mm et celle de la couche intermédiaire ainsi que dudit revêtement métallique sera généralement inférieure à 1 mm.

Ce revêtement métallique présente une surface extérieure rendue rugueuse et servant de support à un entourage poreux plus épais, et un matériau choisi dans la liste des matériaux métalliques et céramiques, déposé par projection à chaud. L'épaisseur de cet entourage sera généralement de plusieurs millimètres afin de pouvoir réaliser une isolation thermique et y faire circuler un fluide.

L'invention a pour second objet un produit revêtu selon les revendications 4 à 8.

D'autres particularités de l'invention ressortiront d'un exemple de réalisation qui va être décrit, à titre non limitatif, en se référant aux dessins joints dans lesquels :

La figure 1 est une coupe axiale d'une portion d'un substrat minéral du type roche sur lequel on a déposé une sous-couche, une couche intermédiaire et un revêtement métallique étanche ;

- la Fig. 2 est une coupe axiale d'une portion d'un substrat ayant reçu les mêmes dépôts et en plus un dépôt extérieur épais en céramique ;
- la Fig. 3 représente schématiquement, en élévation, une installation de projection de matériaux d'apport sur un substrat ; et
- la Fig. 4 représente schématiquement, en élévation, une installation de refusion du revêtement métallique.

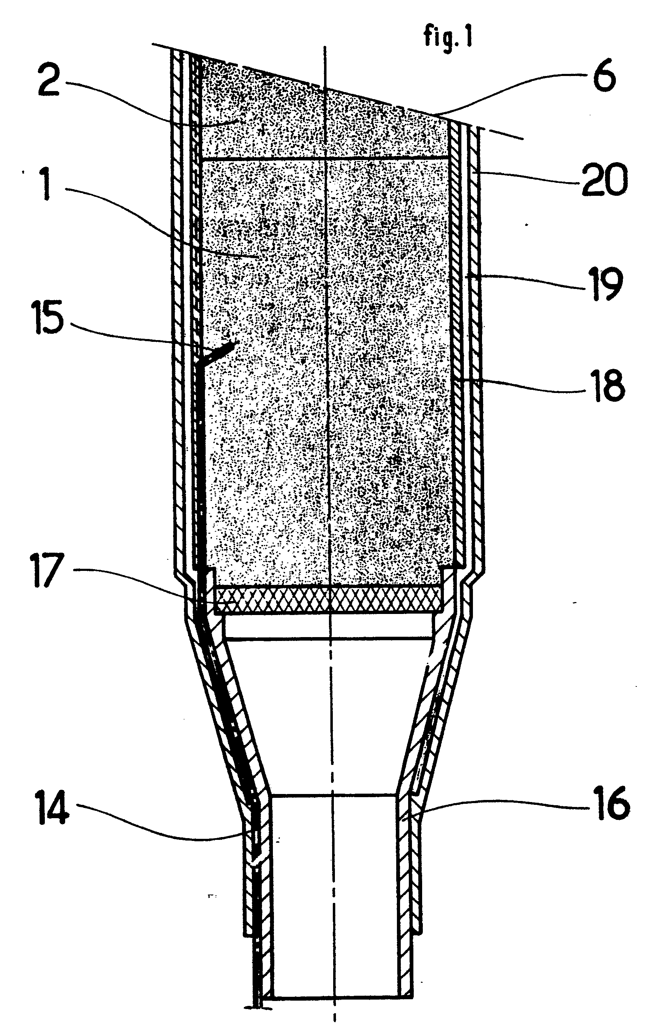

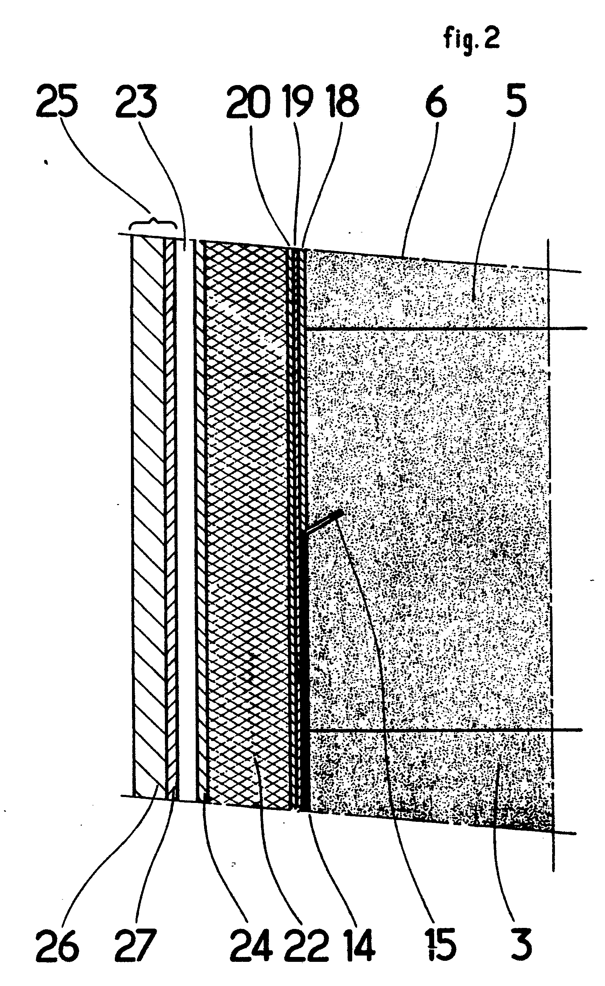

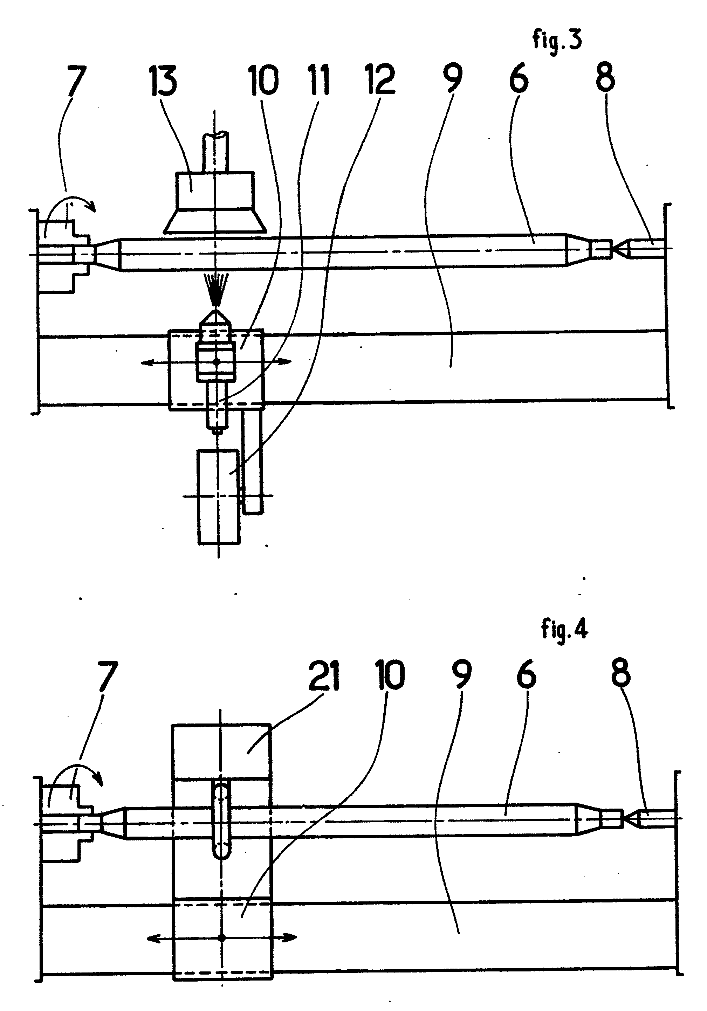

Dans cet exemple, le substrat est constitué par une succession axiale de carottes cylindriques prélevées dans une formation naturelle, par exemple trente carottes en grès d'un diamètre de 60 mm et d'une longueur de 100 mm placées bout à bout et maintenues pressées les unes contre les autres pour former dans leur ensemble un substrat de 3 mètres de long. On voit deux de ces carottes en 1 et 2 sur la Fig. 1 et trois autres carottes 3, 4, 5 sur la Fig. 2. L'installation de la Fig. 3 comporte un tour sur lequel le substrat 6 est tenu en compression axiale entre un mandrin 7 et une contre-pointe 8 et entraîné en rotation, tandis que sur le banc 9 du tour se déplace longitudinalement un chariot 10 porteur d'un pistolet de projection 11 et d'une bobine 12 d'enroulement d'un cordon d'alimentation du pistolet. Une hotte d'aspiration 13 se déplace en même temps que le chariot 10.

On voit sur les Fig. 1 et 2 des sondes de mesure 14, constituées ici par des thermocouples, dont l'extrémité active est introduite dans des trous 15 percés dans les carottes ou placée à la surface des carottes. Ces sondes 14 s'étendent longitudinalement sur les carottes à partir des trous 15 ou des emplacements qui reçoivent leur extrémité active, pour atteindre l'une ou l'autre des deux extrémités longitudinales de la succession axiale de carottes. Ces sondes 14 permettent de déterminer la différence de température entre l'intérieur des carottes et la surface extérieure de celles-ci.

Aux extrémités axiales de l'ensemble des carottes sont disposés des embouts métalliques tubulaires 16 en acier inoxydable et des disques en matériau fritté 17 de sorte que l'on peut ainsi constituer, après exécution d'un revêtement métallique étanche sur l'ensemble des carottes, un conduit dans lequel les disques 17 assurent une bonne répartition d'un fluide à travers les carottes. Ce fluide peut être constitué, par exemple, par de l'air ou de l'oxygène injecté à très haute température et on peut suivre le front de la combustion ainsi engendrée. On peut de cette manière reconstituer en laboratoire des conditions opératoires similaires à celles existant à la profondeur à laquelle les carottes ont été prélevées.

Une sous-couche en céramique 18 est déposée latéralement sur la succession axiale des carottes au moyen de l'installation de la Fig. 3 dans laquelle le pistolet de projection 11 est un pistolet à flamme oxy-acétylénique alimenté par un cordon souple du type corindon bleu. Le pistolet 11 est déplacé automatiquement en translation longitudinale tandis que l'ensemble des carottes est entraîné en rotation. On obtient ainsi une sous-couche uniforme dont l'épaisseur est, par exemple, de 0,3 mm.

Sur cette sous-couche et sur une portion des embouts 16 on dépose avec la même installation et un cordon souple en aluminiure de nickel une couche intermédiaire 19, par exemple d'une épaisseur de 0,7 mm.

De même, sur cette couche intermédiaire 19 et une portion supplémentaire des embouts 16, on effectue, à l'aide de l'installation de la Fig. 3 dans laquelle le pistolet 11 est utilisé avec un cordon souple autofusible à base de nickel, un revêtement métallique 20 d'une épaisseur de 0,8 mm, par exemple.

Ce revêtement 20 est refondu par chauffage inductif à l'aide de l'installation de la Fig. 4 qui comporte un tour tel que celui de la Fig. 3, mais dont le chariot 10 porte un générateur à haute fréquence 21.

On obtient ainsi autour de la succession axiale de carottes un revêtement étanche lié de manière étanche aux embouts 16, retenant les carottes les unes contre les autres et les sondes de mesure contre les carottes et appliqué latéralement contre la succession axiale de carottes.

On a prévu dans la réalisation selon la Fig. 2 de déposer sur le revêtement métallique 20 un revêtement épais en céramique 22. Pour assurer l'adhérence de ce nouveau dépôt, on a décapé au jet d'abrasif, par exemple du corindon, la surface extérieure du revêtement métallique 20, de manière à rendre cette surface rugueuse, la rugosité étant comprise entre 6 et 15 $\mu$Ra. On a amélioré l'adhérence en déposant, par projection à chaud, une couche d'accrochage en aluminiure de nickel à 5 % d'aluminium, d'une épaisseur de 50 à 100 $\mu$m. $\mu$m. Sur cette couche d'accrochage on a projeté à chaud le revêtement épais en céramique 22, par exemple de 10 mm d'épaisseur, qui sert de barrière thermique. Ce revêtement épais 22 peut notamment être obtenu à partir d'un cordon de corindon bleu d'alumine à 3 % d'oxyde de titane.

Dans la réalisation selon la Fig. 2, on a prévu un espace annulaire 23 formé par exemple entre le revêtement 22 recouvert d'une couche d'étanchéité 24 de 1 mm d'épaisseur en une résine synthétique et une enveloppe extérieure 25 comprenant une couche extérieure de fibres de KEVLAR enrobées 26 de 4 mm d'épaisseur et une couche intérieure en caoutchouc synthétique 27 de 1 mm d'épaisseur. L'enveloppe extérieure 25 est tenue à ses extrémités longitudinales par des moyens de support classiques non représentés ici. L'espace annulaire 23 a, par exemple, une épaisseur de 2,5 mm et il est utilisé pour la circulation d'un fluide de refroidissement.

## Revendications

1. Procédé de fabrication d'un revêtement métallique adhérent réalisé sur un substrat minéral du type roche, caractérisé en ce qu'il consiste :

   - à projeter à chaud sur le substrat (6) une couche intermédiaire poreuse (19) en un alliage métallique réfractaire choisi dans la liste des alliages nickelchrome et des aluminures de nickel et de titane,
   - à projeter ensuite à chaud une couche (20) en alliage métallique sur la couche intermédiaire,
   - et à effectuer une refusion de la couche en alliage métallique (20) afin de la rendre étanche.

2. Procédé selon la revendication 1, caractérisé en ce que la couche intermédiaire est elle-même déposée sur une sous-couche poreuse (18) en une céramique prise dans la liste des oxydes d'aluminium et de zirconium et des hydrures de titane, ladite sous-couche étant formée par projection à chaud sur le substrat minéral (6).

3. Procédé selon l'une des revendications 1 et 2, caractérisé en ce que l'on rend rugueuse la surface de la couche en alliage métallique (20), et en ce que l'on dépose sur elle un revêtement épais (22) en céramique.

4. Produit revêtu obtenu par le procédé selon la revendication 1, caractérisé en ce qu'il comprend :

   - un substrat minéral du type roche (6),
   - une couche intermédiaire poreuse (19) en un alliage métallique réfractaire choisi dans la liste des alliages nickel-chrome et des aluminures de nickel et de titane, et déposée sur le substrat minéral du type roche,
   - et une couche étanche et refondue en alliage métallique (20) déposée sur la couche intermédiaire.

5. Produit revêtu obtenu par le procédé selon la revendication 2, caractérisé en ce qu'il comprend :

   - un substrat minéral du type roche (6),
   - une sous-couche en céramique poreuse (18) prise dans la liste des oxydes d'aluminium et de zirconium et des hydrures de titane, et déposée sur le substrat minéral du type roche,
   - une couche intermédiaire poreuse (19) en un alliage métallique réfractaire du type des alliages métalliques nickel-chrome et des aluminures de nickel et de titane,
   - et une couche étanche et refondue en alliage métallique (20).

6. Produit revêtu selon l'une des revendications 4 et 5, caractérisé en ce que la couche étanche en alliage métallique (20) comporte une surface extérieure rendue rugueuse servant de support à un revêtement plus épais (22) en un matériau choisi dans la liste des matériaux métalliques et des céramiques.

7. Produit revêtu selon l'une des revendications 4 à 6, caractérisé en ce que des sondes de mesure (14), montées sur le substrat minéral du type roche (6) sont recouvertes et retenues en place par ladite couche intermédiaire (19).

8. Produit revêtu selon l'une des revendications 4 à 7, caractérisé en ce qu'il comprend un substrat minéral du type roche (6) en forme de cylindre allongé constitué par une succession axiale de carottes cylindriques prélevées dans une formation naturelle rocheuse et appliquées bout à bout les unes contre les autres, deux embouts tubulaires métalliques (16) montés aux extrémités axiales de la succession de carottes, et plusieurs couches (18,19,20) déposées successivement sur les parois latérales libres des carottes, la couche en alliage métallique étanche (20) recouvrant également une portion des embouts tubulaires (16).

## Claims

1. Method of manufacturing an adherent metal coating formed on a mineral substrate of rock type, characterized in that it consists :
   - in the hot projection on the substrate (6) of an intermediate porous layer (19) made from a refractory metal alloy chosen from the list of nickel-chromium alloys and nickel and titanium aluminides,
   - then in the hot projection of a metal alloy layer (20) on the intermediate layer,

- and in re-melting the metal alloy layer (20) so as to make it impervious.

2. Method according to claim 1, characterized in that the intermediate layer is itself deposited on a porous under-layer (18) made from a ceramic taken from the list of aluminium and zirconium oxides and titanium hydrides, said under-layer being formed by hot projection on the mineral substrate (6).

3. Method according to one of claims 1 and 2, characterized in that the surface of the metal alloy layer (20) is roughened, and in that a thick ceramic coating (22) is deposited thereon.

4. Coated product obtained by the method according to claim 1, characterized in that it comprises :
    - a mineral substrate of rock type (6),
    - a porous intermediate layer (198) made from a refractory metal alloy chosen from the list of nickel-chrome alloys and nickel and titanium aluminides and is deposited on the mineral substrate of rock type,
    - and an impervious and re-melted metal alloy layer (20) deposited on the intermediate layer.

5. Coated product obtained by the method according to claim 2, characterized in that it comprises :
    - a mineral substrate of rock type (6),
    - an under-layer (18) made from a porous ceramic taken from the list of aluminium and zirconium oxides and titanium hydrides and deposited on the mineral substrate of rock type,
    - a porous intermediate layer (19) made from a refractory metal alloy of the nickel- chromium metal alloy and nickel and titanium aluminide type,
    - and an impervious and re-melted layer made from metal alloy (20).

6. Coated product according to one of claims 4 and 5, characterized in that the impervious metal alloy layer (20) comprises an external roughened surface serving as a support for a thicker coating (22) made from a material chosen from the list of metal and ceramic materials.

7. Coated product according to one of claims 4 to 6, characterized in that measurement probes (14), mounted on the mineral substrate of rock type (6), are coated and held in position by said intermediate layer (19).

8. Coated product according to one of claims 4 to 7, characterized in that it comprises a mineral substrate of rock type (6) in the form of an elongate cylinder formed by an axial succession of cylindrical core samples taken from a natural rock formation and applied end to end against each other, two tubular metal end pieces (16) mounted at the axial ends of the succession of core samples and several layers (18, 19, 20) deposited successively on the free lateral walls of the core samples, the impervious metal alloy layer (20) also coating a portion of the tubular end pieces (16).

**Ansprüche**

1. Verfahren zur Herstellung eines an einem mineralischen, gesteinsartigen Substrat anhaftenden metallischen Überzugs,
   **dadurch gekennzeichnet,**
    - daß auf das Substrat (6) eine aus einer feuerfesten Metall-Legierung bestehende poröse metallische Zwischenschicht (19) heiß aufgesprüht wird, die aus der Gruppe der Nickel-Chrom-Legierungen und der Nickel- und Titanaluminiden ausgewählt ist,
    - daß anschließend eine aus einer Metall-Legierung bestehende Schicht (20) auf die Zwischenschicht heiß aufgesprüht wird,
    - und daß ein Umschmelzen der Metall-Legierungsschicht (20) erfolgt, um sie wasserdicht zu machen.

2. Verfahren nach Anspruch 1, dadurch gekennzeichnet, daß die Zwischenschicht ihrerseits auf eine aus Keramikmaterial bestehende poröse Unterschicht (18) aufgebracht wird, die aus der Gruppe der Aluminium- und Zirkonoxide und der Titanhydride ausgewählt ist, wobei die Unterschicht durch heißes Aufsprühen auf das mineralische Substrat (6) gebildet wird.

3. Verfahren nach einem der Ansprüche 1 und 2, dadurch gekennzeichnet, daß die Oberfläche der Metall-Legierungsschicht (20) aufgerauht und darauf eine dicke Beschichtung (22) aus Keramikmaterial aufgebracht wird.

4. Beschichtetes Erzeugnis aus dem Verfahren nach Anspruch 1, dadurch gekennzeichnet, daß es umfaßt:
    - ein mineralisches, gesteinsartiges Substrat (6),
    - eine poröse Zwischenschicht (19) aus ei-

ner feuerfesten Metall-Legierung, die aus der Gruppe der Nickel-Chrom-Legierungen und der Nickel- und Titan-Aluminiden ausgewählt und auf das mineralische, gesteinsartige Substrat aufgebracht ist,

- und eine auf die Zwischenschicht aufgebrachte, aus einer Metall-Legierung (20) bestehende wasserdichte und umgeschmolzene Schicht.

5. Beschichtetes Erzeugnis aus dem Verfahren nach Anspruch 2, dadurch gekennzeichnet, daß es enthält:
- ein mineralisches, gesteinsartiges Substrat (6),
- eine poröse Unterschicht (18) aus keramischem Material, das aus der Gruppe der Aluminium- und Zirkonoxide und der Titanhydride ausgewählt und auf das mineralische, gesteinsartige Substrat aufgebracht ist,
- eine poröse Zwischenschicht (19) aus einer feuerfesten Metall-Legierung aus der Gruppe der Nickel-Chrom-Legierungen und der Nickel- und Titanaluminiden,
- und eine wasserdichte und umgeschmolzene Metall-Legierungsschicht (20).

6. Beschichtetes Erzeugnis nach Anspruch 4 oder 5, dadurch gekennzeichnet, daß die aus Metall-Legierung (20) bestehende wasserdichte Schicht (20) eine aufgerauhte Oberfläche aufweist, die als Unterlage für eine stärkere Beschichtung (22) aus einem Material dient, das aus der Gruppe metallischer und keramischer Materialien ausgewählt ist.

7. Beschichtetes Erzeugnis nach einem der Ansprüche 4 bis 6, dadurch gekennzeichnet, daß am mineralischen, gesteinsartigen Substrat (6) Meßsonden (14) angebracht und durch die Zwischenschicht (19) abgedeckt und festgehalten sind.

8. Beschichtetes Erzeugnis nach einem der Ansprüche 4 bis 7, dadurch gekennzeichnet, daß es ein mineralisches, gesteinsartiges Substrat (6) in Form eines länglichen Zylinders aufweist, der aus einer axialen Folge zylindrischer Bohrkerne besteht, die einer natürlichen Felsformation entnommen und mit ihren Enden aneinandergesetzt sind, wobei an den axialen Enden der Bohrkernfolge zwei metallische rohrförmige Übergangsstücke (16) angebracht sind, während die freien Seitenflächen der Bohrkerne mehrere, nacheinander aufgetragene Schichten (18, 19, 20) aufweisen, von denen die aus Metall-Legierung bestehende wasserdichte Schicht (20) gleichermaßen einen Abschnitt der rohrförmigen Übergangsstücke (16) abdeckt.

fig.1

fig. 2

25  23     20 19 18      6      5

26  27      24 22 14      15     3

fig.3

fig.4